# EUROPEAN PATENT APPLICATION

(11) **EP 4 468 826 A1**
(43) Date of publication of application: **27.11.2024**
(21) Application number: 24153936.0
(22) Date of filing: 25.01.2024
(51) Int. Cl.: H05B 45/12, H05B 47/29, H05B 45/50, H05B 47/11, H05B 47/175

(54) **LIGHTING DEVICE HAVING LIGHT DECAY COMPENSATION FUNCTION AND METHOD THEREOF**

(30) Priority: 23.05.2023 CN 202310585992
(71) Applicant: Xiamen PVTECH Co., Ltd., Xiamen, Fujian 361101 (CN)
(72) Inventor: LIN, ZHIRONG, Xiamen (CN); LIN, GUIQIN, Xiamen (CN); LU, FUXING, Xiamen (CN)
(74) Representative: Lang, Christian

(57) **Abstract**

A lighting device (1) having light decay compensation function includes a plurality of light-emitting modules (15), a memory module (12), a driving module (14), an illumination detecting module (13) and a control module (11). The memory module (12) saves the initial illumination value of a preselected position, and there is a preselected distance between the preselected position and the light-emitting modules (15). The driving module (14) generates a driving current to drive one of the light-emitting modules (15). The illumination detecting module (13) detects the current illumination value of a target position and there is the preselected distance between the target position and the light-emitting modules (15). The control module (11) receives the current illumination value and executes a light decay compensation mode. The control module (11) compares the initial illumination value with the current illumination value to obtain a light decay value and increases the driving current to increase the current illumination value in order to compensate for the light decay value.

## Description

### TECHNICAL FIELD

The present invention relates to a lighting device, in particular to a lighting device having light decay compensation function. The present invention further relates to the light decay compensating method for lighting devices.

### BACKGROUND

Light-emitting diode (LED) lighting devices have many advantages, such as low power consumption, long service life, high brightness and environmentally-friendly, so LED lighting devices have been widely used in various buildings. However, currently available LED lighting devices still have many shortcomings to be improved. For example, the light decay of the currently available LED lighting devices will become serious over time. In addition, a currently available LED lighting devices with the light decay compensation function usually detects the light decay of the LEDs thereof, and increases the driving current according to the light decay to perform illumination compensation. However, increasing the driving current also increases the power consumption, which results in a waste of energy. Some currently available LED lighting devices with light decay compensation function can perform illumination compensation by detecting illumination changes inside the light cover thereof. However, the transmittance of the light cover of the LED lighting device will also change over time. The currently available light decay compensation function cannot effectively compensate for the light decay caused by the change of the transmittance of the light cover. China Patent Publication No. CN113597041A, China Patent Publication No. CN115426735A and US Patent No. US10506687B1 also disclose light decay compensation technologies, but these technologies still cannot effectively solve the above-mentioned problems in the prior art.

### SUMMARY

One embodiment of the present invention provides a lighting device having light decay compensation function, which includes a plurality of light-emitting modules, a memory module, a driving module, an illumination detecting module and a control module. The memory module saves the initial illumination value of a preselected position, and there is a preselected distance between the preselected position and the light-emitting modules. The driving module generates a driving current to drive one of the light-emitting modules. The illumination detecting module detects the current illumination value of a target position and there is the preselected distance between the target position and the light-emitting modules. The control module receives the current illumination value and executes a light decay compensation mode. When the control module is executing the light decay compensation mode, the control module compares the initial illumination value with the current illumination value to obtain a light decay value and increases the driving current to increase the current illumination value. The control module stops increasing the driving current until the current illumination value is equal to the initial illumination value in order to compensate for the light decay value.

In one embodiment, the control module periodically performs the light decay compensation mode.

In one embodiment, the memory module saves the preselected maximal driving current of each of the light-emitting modules and the control module executes a switching mode when the driving current exceeds the preselected maximal driving current. The control module switches the driving module to another of the light-emitting modules when the control module is executing the switching mode.

In one embodiment, the control module executes the light decay compensation mode again after the switching mode is executed.

In one embodiment, the lighting device further includes a communication module. The communication module receives the current illumination value and transmits the current illumination value to the control module.

Another embodiment of the present invention provides a light decay compensation method for lighting devices, which includes the following steps: saving the initial illumination value of a preselected position by a memory module, wherein there is a preselected distance between the preselected position and a plurality of light-emitting modules; generating a driving current to drive one of the light-emitting modules by a driving module; detecting the current illumination value of a target position by an illumination detecting module, wherein there is the preselected distance between the target position and the light-emitting modules; and receiving the current illumination value and executing a light decay compensation mode by a control module, wherein when the control module is executing the light decay compensation mode, the control module compares the initial illumination value with the current illumination value to obtain a light decay value and increases the driving current to increase the current illumination value, wherein the control module stops increasing the driving current until the current illumination value is equal to the initial illumination value in order to compensate for the light decay value.

In one embodiment, the light decay compensation method further includes the following step: periodically performing the light decay compensation mode by the control module.

In one embodiment, the light decay compensation method further includes the following steps: saving the preselected maximal driving current of each of the light-emitting modules by the memory module; and performing a switching mode to switch the driving module to another of the light-emitting modules by the control module when the driving current exceeds the preselected maximal driving current.

In one embodiment, the light decay compensation method further includes the following step: executing the light decay compensation mode again by the control module after the switching mode is executed.

In one embodiment, the step of receiving the current illumination value and executing the light decay compensation mode by the control module further includes the following steps: receiving the current illumination value and transmitting the current illumination value to the control module by a communication module.

The lighting device having light decay compensation function in accordance with the embodiments of the present invention may have the following advantages:
(1) In one embodiment of the present invention, lighting device having light decay compensation function, which includes a plurality of light-emitting modules, a memory module, a driving module, an illumination detecting module and a control module. The memory module saves the initial illumination value of a preselected position. The driving module generates a driving current to drive one of the light-emitting modules. The illumination detecting module detects the current illumination value of a target position. The control module can execute a light decay compensation mode. When the control module is executing the light decay compensation mode, the control module compares the initial illumination value with the current illumination value to obtain a light decay value and increases the driving current to increase the current illumination value in order to compensate for the light decay value. Via the above light decay compensation function, the light decay of the lighting device can be effectively compensated, so the current illumination value of the target position can be always constant. Thus, the lighting device can conform to actual requirements.
(2) In one embodiment of the present invention, the lighting device can detect the current illumination value of the target position via the external illumination detecting module and perform the light decay compensation mode via the control module. Therefore, the above light decay compensation function can still effectively compensate for the light decay of the lighting device even if the transmittance of the light cover decreases. As a result, the lighting device can be more comprehensively in use and meet actual requirements.
(3) In one embodiment of the present invention, the lighting device has several light-emitting modules. In addition, the lighting device can perform a switching mode via the control module when the driving current exceeds the preselected maximal driving current. When the control module executes the switching mode, the control module switches the driving module to another light-emitting module in order to drive the light-emitting module. Via the above energy-saving switching mechanism, the power consumption of the lighting device will not increase due to the light decay compensation function. Thus, the lighting device can save more energy and meet the future development trend.
(4) In one embodiment of the present invention, the lighting device has several light-emitting modules and can perform the switching mode via the control module when the driving current exceeds the preselected maximal driving current. When the control module executes the switching mode, the control module switches the driving module to another light-emitting module in order to drive the light-emitting module. The above energy-saving switching mechanism can not only prevent the power consumption of the lighting device from increasing, but also effectively extend the service life of the lighting device.
(5) In one embodiment of the present invention, the lighting device can perform the light decay compensation mode after the switching mode is executed, which can make sure that the current illumination value of the target position can always remain unchanged. Accordingly, the lighting device can provide a great user experience.
(6) In one embodiment of the present invention, the design of the lighting device is simple, so the lighting device can achieve the desired technical effects without significantly increasing the cost thereof. Thus, the lighting device can have practicality.

Further scope of applicability of the present application will become more apparent from the detailed description given hereinafter. However, it should be understood that the detailed description and specific examples, while indicating exemplary embodiments of the present invention, are given by way of illustration only, since various changes and modifications within the spirit and scope of the present invention will become apparent to those skilled in the art from this detailed description.

### BRIEF DESCRIPTION OF THE DRAWINGS

The present invention will become more fully understood from the detailed description given herein below and the accompanying drawings which are given by way of illustration only, and thus are not limitative of the present invention and wherein:
FIG. 1 is the block diagram of the lighting device having light decay compensation function in accordance with one embodiment of the present invention.
FIG. 2 is the block diagram of the lighting device having light decay compensation function in accordance with another embodiment of the present invention.
FIG. 3 is the flow chart of the light decay compensation method for lighting devices in accordance with another embodiment of the present invention.

### DETAILED DESCRIPTION

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing. It should be understood that, when it is described that an element is "coupled" or "connected" to another element, the element may be "directly coupled" or "directly connected" to the other element or "coupled" or "connected" to the other element through a third element. In contrast, it should be understood that, when it is described that an element is "directly coupled" or "directly connected" to another element, there are no intervening elements.

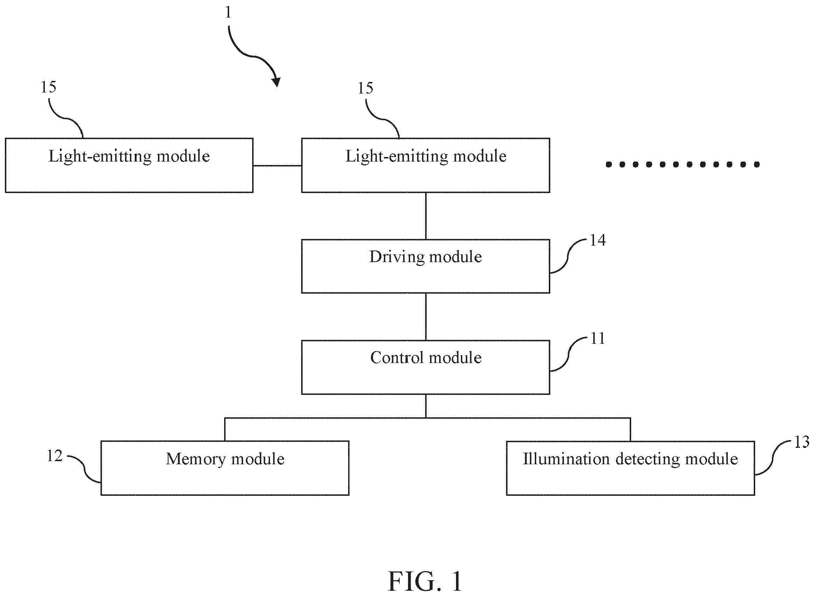

Please refer to FIG. 1, which is the block diagram of the lighting device having light decay compensation function in accordance with one embodiment of the present invention. As shown in FIG. 1, the lighting device 1 includes a plurality of light-emitting modules 15, a memory module 12, a driving module 14, an illumination detecting module 13 and a control module 11.

The light-emitting modules 15 are connected to the driving module 14. In the embodiment, the lighting device 1 has three light-emitting modules 15 (FIG. 1 only shows two of these light-emitting modules 15). In one embodiment, the light sources of the light-emitting modules 15 may be light-emitting diodes (LEDs), LED arrays, fluorescent lamps, bulbs or other similar components.

The driving module 14 generates an initial driving current in order to drive one of the light-emitting modules 15. Thus, only one of the light-emitting modules 15 is in on state and the other of the light-emitting modules 15 are in off state. In one embodiment, the driving module 14 is a LED driver or the drivers of other currently available light sources.

The memory module 12 saves the initial illumination value of a preselected position. There is a preselected distance between the preselected position and the light-emitting modules 15. The preselected distance can be determined according to actual requirements, such as 1m, 2m, 3m, etc. Therefore, the memory module 12 can also save several initial illumination values, which are corresponding to different preselected distances. The initial illumination value can be set by the manufacturer of the lighting device 1 and saved in the memory module 12. In one embodiment, the memory module 12 may be a flash memory, a memory card or other similar components.

The illumination detecting module 13 can be disposed at a target position or adjacent to the target position so as to detect the current illumination value of the target position. There is also the preselected distance between the target position and the light-emitting modules 15. In one embodiment, the illumination detecting module 13 may be an illumination sensor, a light sensor, an illuminometer or other similar components.

Then, the control module 11 can receive the current illumination value from the illumination detecting module 13 so as to perform a light decay compensation mode. When the control module 11 is executing the light decay compensation mode, the control module 11 compares the initial illumination value with the current illumination value to obtain a light decay value. Afterward, the control module 11 controls the driving module 14 to generate a compensation current according to the light decay value with a view to increasing the driving current, such that the current illumination value can be increased. The control module 11 controls the driving module 14 to stop increasing the driving current outputted to the light-emitting module 15 until the current illumination value is equal to the initial illumination value. Via the above light decay compensation mode, the control module 11 can effectively compensate for the light decay value. The control module 11 can periodically perform the light decay compensation mode in order to make sure that the current illumination value of the target position can be always constant.

As described above, the lighting device 1 can detect the current illumination value of the target position via the external illumination detecting module 13 and perform the light decay compensation mode via the control module 11. Therefore, the above light decay compensation function can still effectively compensate for the light decay of the lighting device 1 even if the transmittance of the light cover of the lighting device 1 decreases.

In addition, the user can use an electronic device (e.g., a smart phone, a tablet computer, a laptop computer, etc.) to connect to the lighting device 1, and then adjust the above initial illumination value via an application corresponding thereto in order to meet the requirements of the user.

Further, the memory module 12 can save the preselected maximal driving current of each of the light-emitting modules 15. The preselected maximal driving current can be provided by the manufacturer of the lighting device 1, which can be obtained by performing a calculation based on the optical and electrical parameters of the lighting device 1. When the control module 11 determines that the driving current exceeds the preselected maximal driving current, the control module 11 executes a switching mode. When the control module 11 is executing the switching mode, the control module 11 switches the driving module 14 to another of the light-emitting modules 15 and control the driving module 14 to drive the light-emitting module 15 by the initial driving current in order to make sure that the current illumination value of the target position can always remain unchanged.

As previously stated, the control module can execute the light decay compensation mode to compare the initial illumination value with the current illumination value to obtain the light decay value and increase the driving current to increase the current illumination value in order to compensate for the light decay value. Via the above light decay compensation function, the light decay of the lighting device 1 can be effectively compensated, so the current illumination value of the target position can be always constant. Thus, the lighting device 1 can conform to actual requirements.

Moreover, the control module 11 can execute the switching mode when the driving current exceeds the preselected maximal driving current to switch the driving module 14 to another lighting device 15 in order to drive the light-emitting module 15. The above energy-saving switching mechanism can not only prevent the power consumption of the lighting device 1 from increasing, but also effectively extend the service life of the lighting device 1, which can meet the future development trend. In addition, the lighting device 1 can perform the light decay compensation mode after the switching mode is executed, which can make sure that the current illumination value of the target position can always remain unchanged. Accordingly, the lighting device 1 can provide a great user experience.

The embodiment just exemplifies the present invention and is not intended to limit the scope of the present invention; any equivalent modification and variation according to the spirit of the present invention is to be also included within the scope of the following claims and their equivalents.

It is worthy to point out that the light decay of the currently available LED lighting devices will become serious over time. In addition, a currently available LED lighting devices with the light decay compensation function usually detects the light decay of the LEDs thereof, and increases the driving current according to the light decay to perform illumination compensation. However, increasing the driving current also increases the power consumption, which results in a waste of energy. Some currently available LED lighting devices with light decay compensation function can perform illumination compensation by detecting illumination changes inside the light cover thereof. However, the transmittance of the light cover of the LED lighting device will also change over time. The currently available light decay compensation function cannot effectively compensate for the light decay caused by the change of the transmittance of the light cover. On the contrary, according to one embodiment of the present invention, lighting device having light decay compensation function, which includes a plurality of light-emitting modules, a memory module, a driving module, an illumination detecting module and a control module. The memory module saves the initial illumination value of a preselected position. The driving module generates a driving current to drive one of the light-emitting modules. The illumination detecting module detects the current illumination value of a target position. The control module can execute a light decay compensation mode. When the control module is executing the light decay compensation mode, the control module compares the initial illumination value with the current illumination value to obtain a light decay value and increases the driving current to increase the current illumination value in order to compensate for the light decay value. Via the above light decay compensation function, the light decay of the lighting device can be effectively compensated, so the current illumination value of the target position can be always constant. Thus, the lighting device can conform to actual requirements.

Also, according to one embodiment of the present invention, the lighting device can detect the current illumination value of the target position via the external illumination detecting module and perform the light decay compensation mode via the control module. Therefore, the above light decay compensation function can still effectively compensate for the light decay of the lighting device even if the transmittance of the light cover decreases. As a result, the lighting device can be more comprehensively in use and meet actual requirements.

Besides, according to one embodiment of the present invention, the lighting device has several light-emitting modules. In addition, the lighting device can perform a switching mode via the control module when the driving current exceeds the preselected maximal driving current. When the control module executes the switching mode, the control module switches the driving module to another light-emitting module device in order to drive the light-emitting module. Via the above energy-saving switching mechanism, the power consumption of the lighting device will not increase due to the light decay compensation function. Thus, the lighting device can save more energy and meet the future development trend.

Further, according to one embodiment of the present invention, the lighting device has several light-emitting modules and can perform the switching mode via the control module when the driving current exceeds the preselected maximal driving current. When the control module executes the switching mode, the control module switches the driving module to another light-emitting module in order to drive the light-emitting module. The above energy-saving switching mechanism can not only prevent the power consumption of the lighting device from increasing, but also effectively extend the service life of the lighting device.

Moreover, according to one embodiment of the present invention, the lighting device can perform the light decay compensation mode after the switching mode is executed, which can make sure that the current illumination value of the target position can always remain unchanged. Accordingly, the lighting device can provide a great user experience.

Furthermore, according to one embodiment of the present invention, the design of the lighting device is simple, so the lighting device can achieve the desired technical effects without significantly increasing the cost thereof. Thus, the lighting device can have practicality. As set forth above, the lighting device according to the embodiments of the present invention can definitely achieve great technical effects.

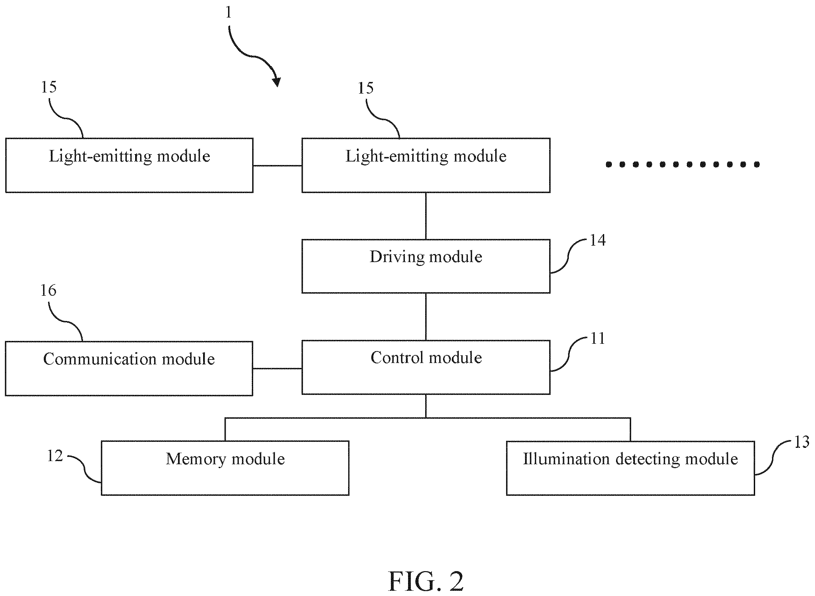

Please refer to FIG. 2, which is the block diagram of the lighting device having light decay compensation function in accordance with another embodiment of the present invention. As shown in FIG. 2, the lighting device 1 includes a plurality of light-emitting modules 15, a memory module 12, a driving module 14, an illumination detecting module 13 and a control module 11.

The difference between this embodiment and the previous embodiment is that the lighting device 1 of this embodiment further includes a communication module 16. The communication module 16 can communicate with the illumination detecting module 13 via a communication protocol so as to receive the current illumination value from the illumination detecting module 13 and then transmit the current illumination value to the control module 11. In one embodiment, the communication module 16 may be an antenna or other currently available signal transmitting/receiving circuits. In one embodiment, the communication protocol may be Bluetooth, ZigBee, or other currently available communication protocols.

Similarly, the control module 11 can receive the current illumination value from the illumination detecting module 13 so as to perform the light decay compensation mode. When the control module 11 is executing the light decay compensation mode, the control module 11 compares the initial illumination value with the current illumination value to obtain the light decay value.

Afterward, the control module 11 calculates the compensation current according to the light decay value. Next, the control module 11 controls the driving module 14 to increase the driving current outputted to the light-emitting module 15 according to the compensation current, such that the current illumination value can be increased. The control module 11 controls the driving module 14 to stop increasing the driving current outputted to the light-emitting module 15 until the current illumination value is equal to the initial illumination value. Via the above light decay compensation mode, the control module 11 can effectively compensate for the light decay value. The control module 11 can periodically perform the light decay compensation mode in order to make sure that the current illumination value of the target position can be always constant.

The embodiment just exemplifies the present invention and is not intended to limit the scope of the present invention; any equivalent modification and variation according to the spirit of the present invention is to be also included within the scope of the following claims and their equivalents.

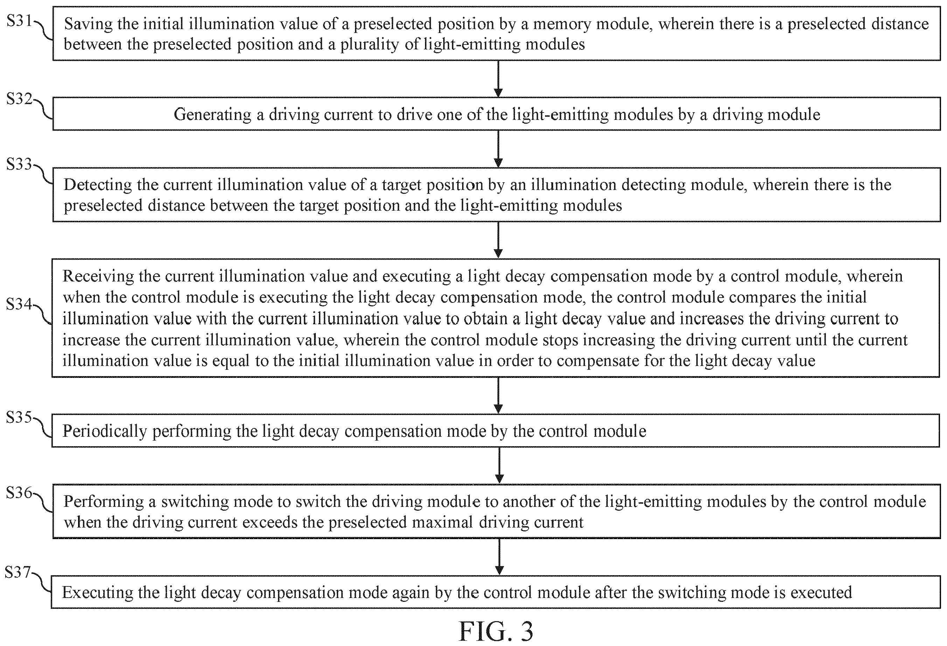

Please refer to FIG. 3, which is the flow chart of the light decay compensation method for lighting devices in accordance with another embodiment of the present invention. As shown in FIG. 3, the light decay compensation method of the embodiment includes the following steps:
Step S31: saving the initial illumination value of a preselected position by a memory module, wherein there is a preselected distance between the preselected position and a plurality of light-emitting modules.
Step S32: generating a driving current to drive one of the light-emitting modules by a driving module.
Step S33: detecting the current illumination value of a target position by an illumination detecting module, wherein there is the preselected distance between the target position and the light-emitting modules.
Step S34: receiving the current illumination value and executing a light decay compensation mode by a control module, wherein when the control module is executing the light decay compensation mode, the control module compares the initial illumination value with the current illumination value to obtain a light decay value and increases the driving current to increase the current illumination value, wherein the control module stops increasing the driving current until the current illumination value is equal to the initial illumination value in order to compensate for the light decay value.
Step S3 5: periodically performing the light decay compensation mode by the control module.
Step S36: performing a switching mode to switch the driving module to another of the light-emitting modules by the control module when the driving current exceeds the preselected maximal driving current.
Step S37: executing the light decay compensation mode again by the control module after the switching mode is executed.

Via the above method, the light decay of the lighting device 1 can be effectively compensated, so the current illumination value of the target position can be always constant. Thus, the lighting device 1 can conform to actual requirements. Further, the lighting device 1 can detect the current illumination value of the target position via the external illumination detecting module 13 and perform the light decay compensation mode via the control module 11. Therefore, the above light decay compensation function can still effectively compensate for the light decay of the lighting device 1 even if the transmittance of the light cover of the lighting device 1 decreases. As a result, the lighting device 1 can be more comprehensively in use and meet actual requirements. Moreover, via the above method, the power consumption of the lighting device 1 will not increase due to the light decay compensation function. Thus, the lighting device 1 can save more energy and meet the future development trend.

The embodiment just exemplifies the present invention and is not intended to limit the scope of the present invention; any equivalent modification and variation according to the spirit of the present invention is to be also included within the scope of the following claims and their equivalents.

Although the operations of the method(s) herein are shown and described in a particular order, the order of the operations of each method may be altered so that certain operations may be performed in an inverse order or so that certain operations may be performed, at least in part, concurrently with other operations. In another embodiment, instructions or sub-operations of distinct operations may be implemented in an intermittent and/or alternating manner.

According to one embodiment of the present invention, lighting device having light decay compensation function, which includes a plurality of light-emitting modules, a memory module, a driving module, an illumination detecting module and a control module. The memory module saves the initial illumination value of a preselected position. The driving module generates a driving current to drive one of the light-emitting modules. The illumination detecting module detects the current illumination value of a target position. The control module can execute a light decay compensation mode. When the control module is executing the light decay compensation mode, the control module compares the initial illumination value with the current illumination value to obtain a light decay value and increases the driving current to increase the current illumination value in order to compensate for the light decay value. Via the above light decay compensation function, the light decay of the lighting device can be effectively compensated, so the current illumination value of the target position can be always constant. Thus, the lighting device can conform to actual requirements.

Also, according to one embodiment of the present invention, the lighting device can detect the current illumination value of the target position via the external illumination detecting module and perform the light decay compensation mode via the control module. Therefore, the above light decay compensation function can still effectively compensate for the light decay of the lighting device even if the transmittance of the light cover decreases. As a result, the lighting device can be more comprehensively in use and meet actual requirements.

Besides, according to one embodiment of the present invention, the lighting device has several light-emitting modules. In addition, the lighting device can perform a switching mode via the control module when the driving current exceeds the preselected maximal driving current. When the control module executes the switching mode, the control module switches the driving module to another light-emitting module in order to drive the light-emitting module. Via the above energy-saving switching mechanism, the power consumption of the lighting device will not increase due to the light decay compensation function. Thus, the lighting device can save more energy and meet the future development trend.

Further, according to one embodiment of the present invention, the lighting device has several light-emitting modules and can perform the switching mode via the control module when the driving current exceeds the preselected maximal driving current. When the control module executes the switching mode, the control module switches the driving module to another light-emitting module in order to drive the light-emitting module. The above energy-saving switching mechanism can not only prevent the power consumption of the lighting device from increasing, but also effectively extend the service life of the lighting device.

Moreover, according to one embodiment of the present invention, the lighting device can perform the light decay compensation mode after the switching mode is executed, which can make sure that the current illumination value of the target position can always remain unchanged. Accordingly, the lighting device can provide a great user experience.

Furthermore, according to one embodiment of the present invention, the design of the lighting device is simple, so the lighting device can achieve the desired technical effects without significantly increasing the cost thereof. Thus, the lighting device can have practicality.

It will be apparent to those skilled in the art that various modifications and variations can be made to the disclosed embodiments. It is intended that the specification and examples be considered as exemplary only, with a true scope of the present invention being indicated by the following claims and their equivalents.

## Claims

1. A lighting device (1) having light decay compensation function **characterized by** comprising:
a plurality of light-emitting modules (15);
a memory module (12) configured to save an initial illumination value of a preselected position and there is a preselected distance between the preselected position and the light-emitting modules (15);
a driving module (14) configured to generate a driving current to drive one of the light-emitting modules (15);
an illumination detecting module (13) configured to detect a current illumination value of a target position, wherein there is the preselected distance between the target position and the light-emitting modules (15); and
a control module (11) configured to receive the current illumination value and execute a light decay compensation mode;
wherein when the control module (11) is executing the light decay compensation mode, the control module (11) compares the initial illumination value with the current illumination value to obtain a light decay value and increases the driving current to increase the current illumination value, wherein the control module (11) stops increasing the driving current until the current illumination value is equal to the initial illumination value in order to compensate for the light decay value.

2. The lighting device (1) having light decay compensation function as claimed in claim 1, **characterized in that** the control module (11) periodically performs the light decay compensation mode.

3. The lighting device (1) having light decay compensation function as claimed in claim 1, **characterized in that** the memory module (12) further saves a preselected maximal driving current of each of the light-emitting modules (15) and the control module (11) executes a switching mode when the driving current exceeds the preselected maximal driving current, wherein the control module (11) switches the driving module to another of the light-emitting modules (15) when the control module (11) is executing the switching mode.

4. The lighting device (1) having light decay compensation function as claimed in claim 3, **characterized in that** the control module (11) executes the light decay compensation mode again after the switching mode is executed.

5. The lighting device (1) having light decay compensation function as claimed in claim 1, **characterized by** further comprising a communication module (16) configured to receive the current illumination value and transmit the current illumination value to the control module (11).

6. A light decay compensation method for lighting devices **characterized by** comprising:
saving an initial illumination value of a preselected position by a memory module (12), wherein there is a preselected distance between the preselected position and a plurality of light-emitting modules (15);
generating a driving current to drive one of the light-emitting modules by a driving module (14);
detecting a current illumination value of a target position by an illumination detecting module (13), wherein there is the preselected distance between the target position and the light-emitting modules (15); and
receiving the current illumination value and executing a light decay compensation mode by a control module (11), wherein when the control module (11) is executing the light decay compensation mode, the control module (11) compares the initial illumination value with the current illumination value to obtain a light decay value and increases the driving current to increase the current illumination value, wherein the control module (11) stops increasing the driving current until the current illumination value is equal to the initial illumination value in order to compensate for the light decay value.

7. The light decay compensation method for lighting devices as claimed in claim 6, further comprising:
periodically performing the light decay compensation mode by the control module (11).

8. The light decay compensation method for lighting devices as claimed in claim 6, **characterized by** further comprising:
saving a preselected maximal driving current of each of the light-emitting modules (15) by the memory module (12); and
performing a switching mode to switch the driving module (14) to another of the light-emitting modules (15) by the control module (11) when the driving current exceeds the preselected maximal driving current.

9. The light decay compensation method for lighting devices as claimed in claim 8, **characterized by** comprising:
executing the light decay compensation mode again by the control module (11) after the switching mode is executed.

10. The light decay compensation method for lighting devices as claimed in claim 6, **characterized in that** a step of receiving the current illumination value and executing the light decay compensation mode by the control module (11) further comprises:
receiving the current illumination value and transmitting the current illumination value to the control module (11) by a communication module (16).
